## Europäisches Patentamt
## European Patent Office
## Office européen des brevets

(19)

(11) Veröffentlichungsnummer : **0 140 287**
**B1**

(12)

# EUROPÄISCHE PATENTSCHRIFT

(45) Veröffentlichungstag der Patentschrift :
22.02.89

(51) Int. Cl.⁴ : **C 25 B 11/10, C 25 B 1/04, C 25 B 1/26**

(21) Anmeldenummer : **84112538.8**

(22) Anmeldetag : **17.10.84**

(54) **Umpolbare Elektrode.**

(30) Priorität : **02.11.83 DE 3339566**
**02.11.83 DE 8331360 U**

(43) Veröffentlichungstag der Anmeldung :
**08.05.85 Patentblatt 85/19**

(45) Bekanntmachung des Hinweises auf die Patenter-
teilung : **22.02.89 Patentblatt 89/08**

(84) Benannte Vertragsstaaten :
**AT BE CH DE FR GB IT LI LU NL SE**

(56) Entgegenhaltungen :
**EP—A— 0 047 595**
**FR—A— 2 213 101**
**GB—A— 2 113 718**
**US—A— 3 822 204**

(73) Patentinhaber : **Heraeus Elektroden GmbH**
**Heraeusstrasse 12 - 14**
**D-6450 Hanau/Main (DE)**

(72) Erfinder : **Fabian, Peter**
**Theodor-Heuss-Strasse 4**
**D-6463 Freigericht 1 (DE)**
Erfinder : **Kotowski, Stephan, Dr.**
**Mainring 8**
**D-6453 Seligenstadt (DE)**
Erfinder : **Busse, Bernd, Dr.**
**Löfflerweg 6**
**D-6100 Darmstadt 13 (DE)**

(74) Vertreter : **Heinen, Gerhard, Dr.**
**W.C. Heraeus GmbH Zentralbereich Patente und**
**Lizenzen Heraeusstrasse 12-14**
**D-6450 Hanau (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zum Betrieb einer Elektroden aufweisenden elektrochemischen Zelle, deren Elektrolyt Kalzium und/oder Magnesium enthält.

Aus der FR-A 2 213 101 ist die Herstellung einer Elektrode bekannt, bei der auf ein Gerüst aus Ventilmetall (Titan oder Titanlegierung) ein Substrat aus Titanoxiden in elektrisch leitender Form durch Flamm- oder Plasmaspritzen aufgebracht wird, welches anschließend durch elektrochemisch aktive Edelmetalle aktiviert wird. Die Elektrode wird in der Chloralkalieelektrolyse stets im anodischen Betrieb verwendet, während die Kathode durch das Quecksilber gebildet wird.

Weiterhin beschreibt die EP-A 47 595 elektrochemische Zellen, deren Elektroden als festgeformte Keramikkörper aus unterstöchiometrischem Titanoxid bestehen, wobei deren Oberfläche wenigstens teilweise elektrokatalytisch aktiviert ist. Durch Spannungsumkehr wird eine Selbstreinigung der Elektroden vorgenommen ; d. h. durch anodische Schlatung einer Titanoxid-Kathode werden Überzüge entfernt.

In einer Reihe von elektrochemischen Verfahren läßt sich ein gewisser Gehalt der Elektrolyten an Kalzium oder Magnesium nicht vermeiden.

Beispiele für solche Verfahren sind die Elektrolyse von Seewasser zur Herstellung von Hypochlorit sowie die Elektrolyse von Abwasser zur Herstellung von Sauerstoff und Wasserstoff, die ihrerseits zur Elektroflotation dienen. Ein solches Verfahren ist aus der US-PS 3 822 204 bekannt, wobei eine kammartige Anordnung von Anoden und Kathoden zur Elektroflotation vorgesehen ist.

Bei Elektrolyse bzw. Elektroflotation scheiden sich häufig kalzium- und/oder magnesiumhaltige Verbindungen auf der Kathode ab, die den weiteren Stromtransport durch die Kathode stark behindern und so zu einer untragbaren Erhöhung der Zellspannung führen.

Ein drittes Problem stellt die Enthärtung von Wasser dar. Hier ist jedoch die Verkalkung der Kathoden erwünscht, denn die Abscheidung von kalzium- und/oder magnesiumhaltigen Verbindungen auf der Kathode führt zur Verringerung der Wasserhärte.

Es sind bisher verschiedene Wege zur Entfernung des kalziumhaltigen Niederschlags vorgeschlagen worden :

a) Zeitweises Spülen des Elektrolyseurs mit Säure (vorzugsweise HCl) respektive periodisches Reinigen mit HCl.

b) Verwendung einer Hilfskathode, die gegenüber der eigentlichen Kathode als Anode fungiert, wobei Kathode und Hilfskathode periodisch automatisch — im elektrischen Sinne — ausgetauscht werden (vgl. DE-OS 30 43 571).

c) Automatische mechanische Reinigung der Elektroden.

d) Eine umpolbare Elektrode aus massivem Edelmetall oder aus einer so dicken Edelmetallauflage, daß weder der Elektrolyt noch eventuell gebildete Produkte diese Auflage durchdringen können ; Elektroden als Keramikkörper gemäß der eingangs genannten EP-A 47 595, sofern geringe Stromstärken angewendet werden.

Der Weg a) bedeutet zeitweilige Unterbrechung des Betriebes und Lagerung sowie Entsorgung der Salzsäure. Er ist also nur in größeren Anlagen, die über dauernd tätiges Personal verfügen, überhaupt gangbar.

Der Weg b) fordern komplizierte mechanische und elektrische Vorrichtungen, außerdem ist eine verstärkte Korrosion der Kathoden nicht vermeidbar.

Der Weg c) ist nur in Lösungen mit sehr geringem Gehalt an Kalzium oder Magnesium gangbar.

Zu d) : Nach dem gegenwärtigen Stand der Technik müßte eine umpolbare Elektrode aus massivem Edelmetall wie beispielsweise Pt oder Ir gefertigt sein, da nur diese Metalle elektrisch leitfähig genug sind, um den nötigen Strom zu transportieren und elektrochemisch widerstandsfähig genug sind, um wechselseitig gleichzeitig als Anode oder Kathode fungieren zu können. Solche Elektroden sind aber sehr teuer.

Weiterhin wurden bei der Elektrolyse von Abwasserlösungen zur Erzeugung von Wasserstoff und Sauerstoff, die ihrerseits zur Elektroflotation dienen, oder auch bei der Elektrolyse von anderen schlecht leitenden wässrigen Lösungen für andere Zwecke, wie z. B. die Aufbereitung von Trinkwässern, bisher häufig parallele Drähte — aus z. B. Titan, das mit einer elektrokatalytischen Schicht überzogen ist — als Anoden oder Kathoden eingesetzt.

Wegen der schlechten Leitfähigkeit der Lösungen konzentriert sich der Stromübergang auf die direkt einander gegenüberleigenden Teile der Drähte, während die Teile der Drähte, die sich zwar noch gegenüberliegen, aber weiter voneinander entfernt sind, fast nichts zum Stromübergang in die Lösung beitragen.

Aufgabe der Erfindung ist es, ein Verfahren anzugeben, nach dem auf einfache Weise die erwähnten Niederschläge von den Elektroden zu entfernen sind, wobei die Elektroden betriebsstabil sind und eine hohe Standzeit aufweisen. Darüberhinaus soll eine Verringerung des Potentials (elektrische Spannung) zwischen den einzelnen Leitern der Elektrode über den Querschnitt (Stromschatten) vermieden werden.

Die Aufgabe wird erfindungsgemäß durch die Merkmale des Anspruchs 1 gelöst.

In einer bevorzugten Ausführungsform weist die Elektrode eine Trägeranordnung aus Stäben rechteckigen Profils oder Querschnitts auf, die kammartig an Stromschienen befestigt sind, wobei sich zwei dieser Elektroden mit gleich großen Elektrodenflächen parallel oder nahezu parallel gegenüberliegen.

Durch den Einsatz von Stäben rechteckigen Profils sowie deren Anordnung zueinander in immer gleichem Abstand und parallel oder im wesentlichen parallel zueinander werden Stromschatten vermieden und dadurch der Gesamtwirkungsgrad der Elektrode wesentlich erhöht.

Nach dem erfindungsgemäßen Verfahren wird das Ansteigen der Zellspannung dadurch verhindert, daß ein eventuell kathodisch gebildeter Belag im anodischen Betrieb wieder abgelöst wird. Es ist nämlich der Elektrolyt in den als Beispiel erwähnten Fällen vor einer als Anode dienenden Elektrode sauer, vor einer als Kathode dienenden Elektrode aber alkalisch. Die in Rede stehenden Niederschläge bilden sich im Alkalischen während sie sich im Sauren lösen. Während nun ein rascher Wechsel der Polarität die Ausbildung der kalzium- und/oder magnesiumhaltigen Verbindungen auf den Elektroden verhindert und somit die beiden ersten der angesprochenen Probleme gelöst werden, führt ein relativ langsamer Wechsel zum Abplatzen der kalzium- und/oder magnesiumhaltigen Verbindungen, die dann abfiltriert werden können, wodurch das dritte Problem gelöst wird.

Im folgenden ist der Gegenstand der Erfindung anhand der Figuren 1 bis 3 näher erläutert.

Figur 1 zeigt schematisch den Schichtenaufbau einer nach dem erfindungsgemäßen Verfahren verwendeten Elektrode ;

Figur 2 A zeigt schematisch den Querschnitt zweiter paralleler Drähte (0) als Elektroden (Stand der Technik) ;

Figur 2 B zweier paralleler Stäbe (Rechteck) ;

Figur 3 zeigt die Anordnung der einzelnen Stäbe zueinander und ihre Stromzuführungen im Elektrolyseur an einer Zellenwand horizontal oder vertikal angeordnet.

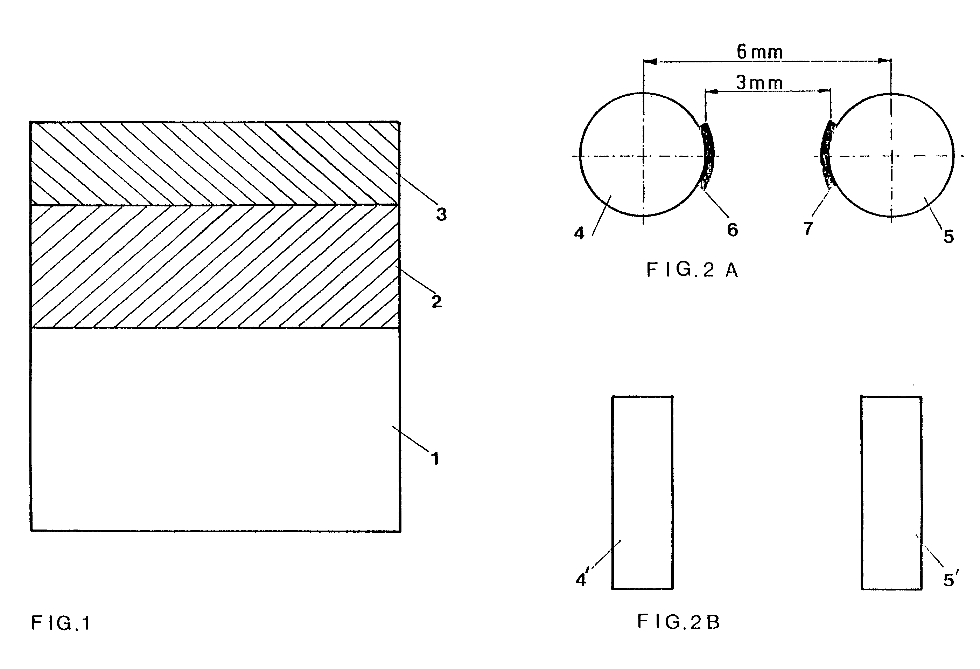

Umpolbare Elektroden lassen sich gemäß Figur 1 aus einem Ventilmetall, das als mechanischer Träger 1 und elektrischer Stromzuführer dient, herstellen. Auf das Ventilmetall wird eine leitfähige keramische Schicht 2 aufgebracht. Danach wird die keramische Schicht 2 mit einer anodisch und kathodisch elektrokatalytisch aktiven Schicht 3 versehen.

Als Ventilmetall für den Träger 1 können beispielsweise Ti, Zr, Hf, Nb, Ta, W sowie deren Mischungen oder Legierungen dieser Metalle, sofern sie anodisch beständig sind, eingesetzt werden.

Beispiele geeigneter Materialien für die keramische Schicht 2 sind $TiO_2$ — teilweise reduziert ($TiO_{2-x}$) oder TiC oder auch andere Verbindungen zwischen Elementen wie Ti, Nb, Ta, Zr, Hf, W, Mo einerseits und $O_2$, $N_2$, B, Si oder C andererseits.

Ein Beispiel für die elektrokatalytisch aktive Schicht 3 ist eine Beschichtung, die aus Oxiden von Ventilmetallen wie z. B. Ti, Nb, Zr, Ta, Hf, W, Mo und Oxiden von Platinmetallen wie z. B. Pd, Pt, Rh, Ru, Ir und Os und auch Re besteht, wobei auch noch nicht oxidische Bestandteile vorhanden sein können. Gemischte Oxide der genannten Metalle sind besonders wirksam. Auch Schichten, die nur aus Metallen wie z. B. Pt oder Ir bestehen, können benutzt werden.

Ebenso sind Schichten, die aus Platinmetalloxiden und Platinmetallen bestehen, geeignet, wie z. B. eine Schicht, die neben Pt und Ir noch Pt-Oxide und Ir-Oxide enthält.

Eine Methode zur Aufbringung der keramischen Schicht 2 ist z. B. das Plasma-Spritzen.

Eine Methode zur Aufbringung einer elektrokatalytisch aktiven Schicht 3 besteht darin, eine Lösung die Metallverbindungen von einem oder mehreren Elementen der Gruppe Ti, Nb, Zr, Hf, W, Mo und von einem oder mehreren Elementen der Gruppe Pd, Pt, Rh, Ru, Ir, Os und Re enthält auf einen geeigneten Untergrund aufzutragen, zu trocknen und danach bei ca. 500 °C ca. 15. Minuten an der Luft zu behandeln.

Geeignete Verbindungen sind z. B. die Chloride. Geeignete Lösungsmittel sind Gemische von Butanol und Salzsäure. Ein geeigneter Untergrund ist z. B. eine durch Plasmaspritzen aufgebrachte leitfähige Schicht von $TiO_2$ — teilweise reduziert.

Der Vorgang wird wiederholt, bis die gewünschte Schichtdicke an elektrokatalytisch aktiver Schicht 3 erzeugt worden ist. Das Verfahren ist aus der Technik der Anodenherstellung für die Chlor-Alkali-Industrie wohl bekannt.

Eine andere Methode zur Aufbringung der elektrokatalytisch aktiven Schicht 3 kann darin bestehen nach demselben Verfahren wie o. a. eine Schicht aufzubringen, die anschließend bei ca. 400 °C im Wasserstoffstrom teilweise reduziert wird, wobei aus einigen Platinmetalloxiden die Metalle gebildet werden. Bei dieser Methode wird häufig auf die Beimischung der Ventilmetalloxide verzichtet. Eine dritte Methode besteht z. B. in der galvanischen Aufbringung einer Pt-Schicht oder einer Schicht einer Legierung von Platinmetallen.

Wie aus Figur 2 A (Stand der Technik) ersichtlich, sind Anoden 4 und Kathoden 5 aus Titandrähten mit kreisrundem Querschnitt einige Millimeter voneinander beabstandet.

Wegen des hohen elektrischen Widerstandes ist das Potential zwischen Draht und der angrenzenden Lösung an deren Stellen (Stromschatten) um etwa 50 bis 200 mV geringer als an den verstärkten Randbereichen 6, 7 von Anode 4 und Kathode 5. Dabei wurde ein spezifischer Widerstand von 50 cm angenommen, wie er für die Anwendung in der Elektroflotation und in der Trinkwasseraufbereitung typisch ist. Es ist ersichtlich, daß jeweils nur der verstärkte Randbereich 6, 7 der Drähte aktiv zum

3

Stromdurchgang beiträgt.

Bei der Ausführung mit Titan-Rechteckstäben als Elektroden 4', 5' gemäß Figur 2 B dient aufgrund des parallelen Gegenüberliegens der Flächen und ihres gleichen Abstandes die gesamte Stabfläche, die einer anderen gegenüberliegt, dem Stromdurchgang. Der gesamte Wirkungskreis ist entsprechend gesteigert.

Während die Elektroden 4, 5 aus Drähten gemäß Figur 2 A bereits nach ca. acht Wochen verbraucht waren und mit einer neuen elektrokatalytisch wirksamen Schicht versehen werden mußten, brauchte die elektrokatalytisch aktive Oberflächenschicht auf den als Titanrechteckstäben ausgebildeten Elektroden 4', 5' gemäß Figur 2 B auch nach ca. dreißig Wochen noch immer nicht erneuert zu werden. Statt Titan können auch andere Ventilmetalle angewandt werden.

Zweckmäßig sind zwischen einzelnen, nur wenige Millimeter voneinander im Abstand parallel angeordneten Stäben isolierende Abstandshalter vorgesehen.

Mit Vorteil ist die Oberfläche der Stäbe rundum sowohl anodisch als auch kathodisch aktiv beschichtet, bevorzugt im thermischen Spritzverfahren mit Platingruppen-Metalloxiden in Mischung mit Ventilmetalloxiden.

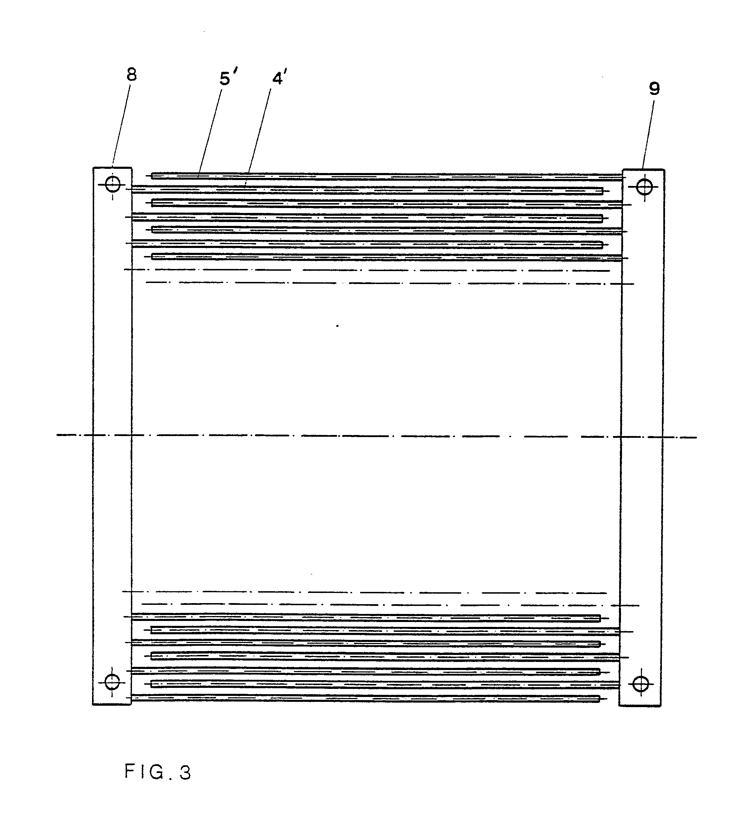

Gemäß Figur 3 werden die als Rechteckstäbe ausgeführten Elektroden 4', 5' wie Kämme ineinandergreifend angeordnet, wobei die Kammrücken als Stromschienen 8, 9 für die Stromzufuhr zu den Elektroden 4', 5' ausgebildet sind.

Bei den Versuchen zur Herstellung einer umpolbaren Elektrode zeigte sich überraschend, daß geeignete keramische Materialien für die leitfähige keramische Schicht 2 gemäß Figur 1, die als Träger 1 dienenden Ventilmetalle, die im kathodischen Betrieb zur Hydridbildung neigen, vor dieser Hydridbildung zu schützen vermögen.

Zwar sind solche keramische Materialien schon seit längerem bei der Herstellung von Elektroden bekannt ; wegen der Rissigkeit und Porösität der aus ihnen erzeugten Schichten mußte jedoch damit gerechnet werden, daß sie das als Träger 1 dienende Ventilmetall nicht ausreichend vor eindringendem Wasserstoff schützen würden und daß sie deshalb für den kathodischen Betrieb ungeeignet seien.

Dies gilt besonders für plasmagespritzte keramische Materialien, da diese viel poröser sind als gesinterte oder durch Sintern aufgebrachte Materialien. Andererseits lassen sich jedoch auch Streckmetalle oder Drähte aus Titan durch Plasmaspritzen beschichten, was durch Sintern nicht möglich ist.

Die oben erwähnten keramischen Materialien sind sowohl anodisch wie auch kathodisch völlig unzureichende Elektrokatalysatoren. Sie mußten daher mit der in Figur 1 dargestellten elektrokatalytisch aktiven Schicht 3 versehen werden.

Hier zeigte sich völlig überraschend, daß Anodenbeschichtungen wie für die Chlor-Alkali-Elektrolyse bei hohen Stromdichten, an sich bekannt, auch bei kathodischem Betrieb stabil sind, sofern die Stromdichte hinreichend gering ist und wenn wie oben angegeben hergestellt.

Weiter zeigte sich, überraschenderweise, daß der dauernde Ladungswechsel der elektrokatalytisch aktiven Schicht 3 nicht schadet.

Dies steht im Gegensatz zur veröffentlichten Lehrmeinung (z. B. Juchnierwicz, Plat. Met. Rev. 6, 1962, 100-105 oder R. Doblhofer e. a., Ber. Buns. Ges. 82 (1978), 1046).

Die nachfolgenden Beispiele sollen der genaueren Erläuterung des technischen Vorgehens dienen.

A) Durch eine Kartuschenzelle, wie sie in der DE-OS 31 38 438 beschrieben ist, wurde eine Lösung von 8 g NaCl/l in Leitungswasser von 15° Härte gepumpt. Der Volumenstrom betrug 6 l/h, der Innendurchmesser der Kartusche 40 mm, die Länge der Kartusche 25 cm. Es wurde ein Strom von 10 A (entsprechend ca. 600 A/m²) durch die Zelle geschickt.

Im ersten Versuch wurde dieser Strom alle 15 Minuten umgepolt, im Vergleichsversuch wurde nicht umgepolt.

Während im ersten Versuch auch nach 8 h keine Ablagerung auf einer der Elektroden gefunden wurde, war im Vergleichsversuch die Kathodenseite hell weiß von abgelagerten Kalzium- und/oder Magnesiumverbindungen geworden. Die Zellspannung begann zu steigen.

In einem Dauertest unter Umpolen lief dieselbe Zelle mehrere Monate ohne Beanstandungen, bis der Versuch unterbrochen wurde, da offensichtlich keine Verkalkung oder anderweitige Beschädigung der Elektroden aufgetreten war.

B) Es wurde derselbe Aufbau wie in Beispiel A benutzt. Jedoch wurde nur alle 2-3 Stunden umgepolt, der Elektrolyt war Leitungswasser und die Stromdichte betrug nur ca. 100 A/m². In diesem Fall werden die kathodisch abgeschiedenen Kalzium- und/oder Magnesiumverbindungen in filtrierbarer Form abgesprengt und das durchfließende Wasser wies eine entsprechend geringere Härte auf.

Sollten die kalzium- und/oder magnesiumhaltigen kathodischen Niederschläge beim Wechsel zum anodischen Betrieb teilweise in Lösung gehen, so kann dieser Teil des Wassers verworfen werden, so daß man nur einen entsprechend geringeren Teil enthärteten Wassers hat.

C) Es wurden Ti-Stäbe mit einer plasmagespritzten Schicht (Zwischenschicht) aus teilweise reduziertem TiO$_2$ versehen. Die so behandelten Stäbe wurden mit einer elektrolytisch aktiven Beschichtung, wie in der DE-OS 23 00 422 beschriebenen versehen. Zum Vergleich wurden Ti-Stäbe mit derselben elektrokatalytisch aktiven Schicht versehen ohne daß vorher eine Schicht von TiO$_2$ aufgebracht worden wäre.

Aus den Drähten mit Zwischenschicht wurde eine Elektrode zusammengeschweißt, so daß Kämme mit den Drähten ineinandergreifend angeordnet sind, wobei der Kammrücken der Stromzuführung (als Klemme) dient.

An die Klemmen wurde eine Gleichspannung gelegt, die alle 15 Minuten umgepolt wurde. Die Stromdichte betrug 100 A/m$^2$. Die Elektroden wurden in Leitungswasser von 15° Härte und in einem Industrieabwasser betrieben. Im Leitungswasser betrug die Zellspannung ca. 6-7 V, im Abwasser ca. 3-4 V.

Genauso wurde mit den Vergleichselektroden verfahren.

Als Kriterium für den Ausfall der Elektroden wurde ein Ansteigen der Zellspannung auf ca. 15 V benutzt. Unter diesen Umständen ergab sich das in Tab. 1 dargestellte Bild :

Tabelle 1

| Typ der Elektrode | Typ des Wassers | Lebensdauer in Tagen |
|---|---|---|
| mit Zwischenschicht | Leitungswasser | 102 |
| mit Zwischenschicht | Abwasser | 30 |
| ohne Zwischenschicht | Leitungswasser | 38 |
| ohne Zwischenschicht | Abwasser | 14 |

Es ist ersichtlich, daß durch die Zwischenschicht die Lebensdauer der Elektroden mehr als verdoppelt wird.

**Patentansprüche**

1. Verfahren zum Betrieb einer Elektroden aufweisenden elektrochemischen Zelle, deren Elektrolyt Kalzium und/oder Magnesium enthält, wobei Elektroden (4, 5, 4', 5') verwendet werden, die auf einen Träger aus Ventilmetall eine durch Plasmaspritzen aufgebrachte leitfähige keramische Zwischenschicht (2) aus der Gruppe eines Oxids, eines Nitrids, eines Borids, eines Carbids, eines Silizids eines Ventilmetalls und eine darauf aufgebrachte elektrokatalytisch aktive Schicht (3) aus Metall(en) der Platingruppe, Rhenium, Mischungen oder Mischkristalle aus Verbindungen vorgenannter Metalle mit den genannten Ventilmetallverbindungen als Deckschicht aufweisen und wobei die Elektroden unter Wechsel der Polarität als Anoden und Kathoden betrieben werden.

2. Verfahren nach Anspruch 1, wobei die Zelle mit Elektroden aus Stäben rechteckigen Profils oder Querschnitts (4', 5') bestückt ist, welche kammartig an Stromschienen (8, 9) befestigt sind, wobei sich zwei dieser Elektroden (4', 5') mit gleich großen Elektrodenflächen parallel oder nahezu parallel gegenüberliegen.

3. Verwendung des Verfahrens nach Anspruch 1 oder 2 zur Herstellung von Hypochlorit aus Seewasser oder anderen kalzium- und/oder magnesiumhaltigen Wässern.

4. Verwendung des Verfahrens nach Anspruch 1 oder 2 zur Herstellung von Sauerstoff und/oder Wasserstoff aus kalzium- und/oder magnesiumhaltigen wässerigen Lösungen.

5. Verwendung der elektrochemischen Zelle nach Anspruch 1 oder 2 zur Entkalkung von wässerigen Lösungen.

**Claims**

1. Method for operating an electrochemical cell comprising electrodes, the electrolyte of which contains calcium and/or magnesium, wherein electrodes (4, 5, 4', 5') are used which on a carrier of valve metal comprise a conductive ceramic intermediate layer (2) from the group comprising an oxide, a nitride, a boride, a carbide or a silicide of a valve metal, applied by plasma spraying, and an electrocatalytically active layer (3) of metal(s) of the platinum group, rhenium, mixtures or mixed crystals of compounds of the aforesaid metals with the said valve metal compounds applied thereon as a coating layer, and wherein the electrodes are operated as anodes and cathodes with changing polarity.

2. Method according to claim 1, wherein the cell is equipped with electrodes comprising bars of rectangular profile or cross-section (4', 5') which are secured in a comb-like manner on contact bars (8, 9) two of these electrodes (4', 5') having electrode surfaces of the same size opposing one another in parallel or almost parallel positions.

3. Use of the method according to claim 1 or 2 for the production of hypochlorite from sea water or other waters containing calcium and/or magnesium.

4. Use of the method according to claim 1 or 2 for the production of oxygen and/or hydrogen from aqueous solutions containing calcium and/or magnesium.

5. Use of the electrochemical cell according to claim 1 or 2 for decalcification of aqueous solutions.

**Revendications**

1. Procédé d'exploitation d'une cellule électrochimique possédant des électrodes et dont l'électrolyte contient du calcium et/ou du magnésium, selon lequel on emploie des électrodes (4, 5, 4', 5') qui présentent, sur un support en métal type valve, une couche intermédiaire céramique (2) conductrice, appliquée par pulvérisation au plasma et formée du groupe constitué d'un oxyde, d'un nitrure, d'un borure, d'un carbure ou d'un siliciure d'un métal type valve, ainsi qu'une couche électrocatalytiquement active (3) appliquée en tant que couche de recouvrement sur cette couche intermédiaire et formée d'un métal ou de plusieurs métaux du groupe comprenant le platine, le rhénium, mélanges ou cristaux mixtes de composés des métaux précités avec les composés de métaux type valve mentionnés, et selon lequel on fait fonctionner les électrodes comme anodes et cathodes en inversant la polarité.

2. Procédé suivant la revendication 1, selon lequel on équipe la cellule d'électrodes formées de barres de profil ou section rectangulaire (4', 5'), qui sont fixées à la façon des dents d'un peigne sur des barres omnibus (8, 9), deux de ces électrodes (4', 5') étant chaque fois disposées parallèles ou à peu près parallèles l'une en face de l'autre par des aires d'électrodes de même grandeur.

3. Utilisation du procédé suivant la revendication 1 pour la production d'hypochlorite à partir d'eau de mer ou d'autres eaux contenant du calcium et/ou du magnésium.

4. Utilisation du procédé suivant la revendication 1 ou 2 pour la production d'oxygène et/ou d'hydrogène à partir de solutions aqueuses contenant du calcium et/ou du magnésium.

5. Utilisation de la cellule électrochimique suivant la revendication 1 ou 2 pour l'adoucissement de solutions aqueuses.

FIG.2 A

FIG.2B

FIG.1

FIG. 3